# EUROPEAN PATENT SPECIFICATION

(11) **EP 2 513 242 B1**
(45) Date of publication and mention of the grant of the patent: **02.09.2015**
(21) Application number: 10838216.9
(22) Date of filing: 15.12.2010
(51) Int. Cl.: C09J 133/04, C09J 9/00, C09J 11/00, C09J 7/02, C09J 133/08

(54) **PRESSURE SENSITIVE ADHESIVES FOR LOW SURFACE ENERGY SUBSTRATES**
DRUCKEMPFINDLICHE HAFTSTOFFE FÜR SUBSTRATE MIT GERINGER OBERFLÄCHENENERGIE
ADHÉSIFS SENSIBLES À LA PRESSION POUR DES SUBSTRATS À FAIBLE ÉNERGIE DE SUPERFICIELLE

(30) Priority: 18.12.2009 US 287729 P
(43) Date of publication of application: 24.10.2012
(73) Proprietor: 3M Innovative Properties Company, Saint Paul, MN 55133-3427 (US)
(72) Inventor: TRASER, Steffen, D-41453 Neuss (DE); D'HAESE, Francois C., B-1831 Deigem (BE)
(74) Representative: Herzog, Fiesser & Partner Patentanwälte PartG mbB
(86) International application number: PCT/US2010/060405
(87) International publication number: WO 2011/075501

(56) References cited:
- EP-A1- 1 245 656
- WO-A1-2006/119505
- KR-A- 20090 078 204
- US-A1- 2004 137 222
- US-A1- 2005 095 370
- US-B1- 6 620 870

## Description

### Technical Field

This disclosure relates to acrylate-based pressure sensitive adhesives and their application to substrates having a low surface energy.

### Background

Acrylate pressure sensitive adhesives are well-known in the art. Ulrich (U.S. Pat. No. RE 24,906) describes alkyl acrylate copolymers, which comprise a major amount of C4 to C 14 alkyl esters of acrylic acid monomers and a minor portion of a copolymerizable polar monomer such as acrylic acid. Such adhesives are widely popular due to their availability, their low cost, and their ability to provide the requisite fourfold balance of adhesion, cohesion, stretchiness, and elasticity known to be required for effective pressure sensitive adhesives.

In some industries, manufacturers have started to use low surface energy materials. For example, traffic signs have traditionally been made from aluminum, a substrate that has a high surface energy. Recently, low surface energy substrates like powder coated or painted surfaces, or polyethylene have been used to make traffic signs. The acrylate-based adhesives designed for use on aluminum substrates have not shown adequate performance on low surface energy substrates, e.g., the adhesive is easy to remove. Rubber-based adhesives have shown good performance on low surface energy substrates, but have poor aging and cold temperature performance.

WO 2006/119505 discloses a wet and dry stick adhesive comprising a blend of (i) 25-75 parts by weight of a hydrophilic pressure sensitive adhesive having a first polyacrylate, (ii) 24-60 parts by weight of a non-hydrophobic pressure sensitive adhesive having a second polyacrylate, and (iii) 1-15 parts by weight of a tackifying agent.

EP 1245656 discloses a transparent pressure sensitive adhesive layer which comprises (i) a reaction product of (a) one or more alkyl(meth)acrylate monomers and (b) one or more moderately polar Lewis base-functional copolymerizable monomers, and (ii) one or more tackifying resins, wherein the concentration of the alkyl acrylate monomer or monomers and the thickness of the pressure-sensitive adhesive layer are selected so that the pressure-sensitive adhesive layer has a 90° peel adhesion from polycarbonate after a dwell time of 72 hours as measured according to FINAT method no. 2 of at least 35 N/1.27 cm.

### Summary

In some embodiments, it is desirable to have an acrylate-based adhesive that is able to adhere to low surface energy substrates while offering stability, good aging properties, good low and high temperature shear performance, heat and humidity resistance, and/or good resistance to chemicals (e.g., oil).

In one aspect, the present disclosure provides a cured adhesive composition comprising (a) a copolymer comprising the reaction product of: 65 to 94.5 wt % of a C₈ acrylate ester, 0.5 to 5 wt % of a polar cross-linkable monomer, and 5-30 wt % of a non polar monomer; wherein the copolymer has a weight average molecular weight of 400,000 to 2,200,000 grams/mole and wherein the reaction is in the presence of a solvent; (b) 30 to 70 parts of a hydrogenated hydrocarbon tackifier per 100 parts of the copolymer; and (c) 0.01 to 3 parts (solid/solid) of a cross-linking agent per 100 parts of the copolymer; wherein the cured adhesive has a peel value greater than 6 N/cm when tested according to FINAT test method No. 2 on a low density polyethylene; and further wherein the cured adhesive has a shear value greater than 2000 minutes when tested according to FINAT test method No. 8 on a low density polyethylene.

In another aspect, the present disclosure provides an article comprising (a) a cured adhesive composition comprising (i) a copolymer comprising the reaction product of: 65 to 94.5 wt % of a C₈ acrylate ester, 0.5 to 5 wt % of a polar cross-linkable monomer, and 5-30 wt % of a non polar monomer; wherein the copolymer has a weight average molecular weight of 400,000 to 2,200,000 grams/mole; (ii) 30 to 70 parts of a hydrogenated hydrocarbon tackifier per 100 parts of the copolymer; and (iii) 0.01 to 3 parts (solid/solid) of a cross-linking agent per 100 parts of the copolymer; wherein the cured adhesive has a peel value greater than 6 N/cm when tested according to FINAT test method No. 2 on a low density polyethylene; and further wherein the cured adhesive has a shear value greater than 2000 minutes when tested according to FINAT test method No. 8 on a low density polyethylene; and (b) a substrate having a surface tension less than 50 mN/m.

In another embodiment, a method of making an article is provided comprising (a) polymerizing (i) 65 to 94.5 wt % of a C₈ acrylate ester; (ii) 0.5 to 5 wt % of a polar cross-linkable monomer, and (iii) 5-30 wt % of a non polar monomer in a solvent to form a copolymer; (b) adding to the copolymer: (i) 30 to 70 parts of a hydrogenated hydrocarbon tackifier per 100 parts of the copolymer; and (ii) 0.01 to 3 parts (solid/solid) of a cross-linking agent per 100 parts of the copolymer to form a curable adhesive composition; (c) curing the curable adhesive composition; and (d) contacting the cured adhesive composition between a substrate having a surface tension less than 50 mN/m and a carrier film.

The above summary is not intended to describe each embodiment. The details of one or more embodiments of the disclosure are also set forth in the description below. Other features, objects, and advantages will be apparent from the description and from the claims.

### Detailed Description

The present disclosure provides an adhesive for adhesion to low surface energy substrates.

"a", "an", and "the" are used interchangeably and mean one or more;
"and/or" is used to indicate one or both stated cases may occur, for example A and/or B includes, (A and B) and (A or B);
"cross-linking" refers to connecting two pre-formed polymer chains using chemical bonds or chemical groups in order to increase the modulus of the material;
"interpolymerized" refers to monomers that are polymerized together to form a polymer backbone; and
"(meth)acrylate" refers to compounds containing either an acrylate (CH₂=CHCOOR) or a methacrylate (CH₂=CCH₃COOR) structure or combinations thereof.

Also herein, recitation of ranges by endpoints includes all numbers subsumed within that range (e.g., 1 to 10 includes 1.4, 1.9, 2.33, 5.75, 9.98, etc.).

Also herein, recitation of "at least two" includes all numbers of two and greater (e.g., at least 4, at least 6, at least 8, at least 10, at least 25, at least 50, at least 100, etc.).

Also herein, recitation of "at least one" includes all numbers of one and greater (e.g., at least 2, at least 4, at least 6, at least 8, at least 10, at least 25, at least 50, at least 100, etc.).

The characteristics of pressure sensitive adhesives are determined by interfacial and rheological properties. It is known that the rheology of a pressure sensitive adhesive can be varied by altering the glass transition temperature (Tg). Polyacrylate pressure sensitive adhesives are generally copolymers of a low glass transition temperature comonomer (historically: isooctyl acrylate, 2-ethyl hexyl acrylate, or butylacrylate) and a high glass transition temperature comonomer (historically: acrylic acid). The Tg can be varied by adjusting the ratio of the low and the high Tg comonomer. These pressure sensitive adhesives (which have an acrylic acid amount in the range of 5-15 %) will lead to excellent peel and shear-properties on high energy surfaces like stainless steel. However, on low surface energy surfaces, these pressure sensitive adhesives perform inadequately.

In selecting a pressure sensitive adhesive for low surface energy surfaces, it is desirable to have a composition with sufficient adhesion (as measured by the peel test) to stick to the low surface energy surface, while having sufficient cohesive strength (i.e., internal strength of the adhesive) (as measured by the shear test). Thus, the adhesive and cohesive properties of the pressure sensitive adhesive must be balanced. The pressure sensitive adhesive of the present disclosure meets the tougher requirements of low surface energy bonding by selecting particular combinations of monomers, tackifier, and cross-linking agent. In one embodiment, the pressure sensitive adhesive is acrylated-based.

To achieve sufficient adhesion on low surface energy surfaces (i.e., a high peel performance) a monomer with a low Tg is needed. In the present disclosure the low Tg monomer is an acrylic ester.

Useful acrylic esters include at least one monomer selected from the group consisting of a first monofunctional acrylate ester of a linear or branched non-tertiary alkyl alcohol, the alkyl group of which comprises 8 carbon atoms.

Exemplary C₈ acrylate ester monomers include, 2-ethylhexyl acrylate, n-octyl acrylate, isooctyl acrylate, and combinations thereof.

To further enhance the adhesion to low surface energy surfaces, a tackifier is used. In the present disclosure suitable tackifiers include hydrogenated hydrocarbon tackifiers. Of particular interest are partially hydrogenated hydrocarbon tackifiers. Hydrogenated hydrocarbon tackifiers are traditionally used in more rubber-based adhesives rather than acrylic-based pressure sensitive adhesives. The hydrogenated hydrocarbon tackifiers are found to be particularly useful in the acrylate-based pressure sensitive adhesives for low surface energy substrates disclosed herein. Exemplary hydrogenated hydrocarbon tackifiers include C₉ and C₅ hydrogenated hydrocarbon tackifiers. Examples of C₉ hydrogenated hydrocarbon tackifiers include those sold under the trade designation: "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 500" sold by Exxon Mobil Corp., Irving, TX. Of particular interest are partially hydrogenated C₉ hydrogenated tackifiers, including "REGALITE S-5100", "REGALITE R-7100" and "REGALITE R-9100".

Examples of C₅ hydrogenated hydrocarbon tackifiers include, those sold under the trade designation: "EASTOTAC C100" series, "EASTOTAC C 115" series, "EASTOTAC 130" series, and "EASTOTAC 142" series from Eastman Chemical Co., Middelburg, Netherlands.

In one embodiment, the pressure sensitive adhesive comprises only hydrogenated hydrocarbon tackifiers.

The tackifier will increase the peel adhesion, however it will also reduce the cohesion (i.e., decrease shear performance). Therefore, a polar cross-linkable monomer may be added to increase the cohesion. Typically however, the polar cross-linkable monomer also decreases the peel strength on low surface energy substrates. Further, the commercially available hydrogenated hydrocarbon tackifiers typically show phase separation and are not compatible with high concentrations of polar cross-linkable monomers. Therefore, low levels of polar cross-linkable monomers are used, typically less than about 5%.

A non polar monomer is added to the pressure sensitive adhesive to improve the shear performance. This non polar monomer also assists in solvating the hydrogenated hydrocarbon tackifier and minimizing the phase separation of the tackifier. In one embodiment, the non polar monomer is a high Tg monomer, that is the monomer has a Tg of at least 5, 10, 15, 20, 25, 30, 35, 40, 50, 60, or even 70°C; at most 25, 30, 35, 40, 50, 60, 70, or even 80 °C. The high Tg non polar monomer may assist in high peel strengths and high shear strengths of the pressure sensitive adhesive on low surface energy surfaces.

A second non polar monomer may be added to tailor the polymer to achieve the best solubility of the hydrogenated hydrocarbon tackifier within the pressure sensitive adhesive matrix.

The addition of at least one non polar monomer and/or the reduction of the polar cross-linkable monomer content will increase the miscibility of the pressure sensitive adhesive with the hydrogenated hydrocarbon tackifier.

Low cross-linking agent concentrations are needed to achieve suitable adhesion on a low surface energy surface, however compositions with low level of cross-linking agent suffer from shear problems. With the combination of monomers and hydrogenated hydrocarbon tackifier, a stable system is achieved relative to the cross-linking agent concentrations.

Aside from the selection of particular combinations of the monomers, tackifier and cross-linking agent, the molecular weight of the polymeric composition is also believed to play a key role in the bonding to low surface energy surfaces. Low molecular weights provide good peel values, but poor cohesion, while high molecular weights provide poor peel values, but good cohesion. Thus, a broad molecular weight distribution may be used to achieve a tacky system (low molecular weight fractions) with a high shear (high molecular weight fractions).

The polymerization of the monomers in a solvent is also believed to influence the bonding of the adhesive to the low surface energy substrate. Solvent polymerization enables a broader range of monomers to be used (as compared to solventless polymerization, e.g., UV) and enables one to tailor the polymer to make different molecular weights and different polymeric structures (e.g., linear or branched polymers).

Described below is more detail on the preparation of the pressure sensitive adhesives according to the present disclosure.

A C₈ acrylic ester, a polar cross-linkable monomer, and at least one non polar monomer are polymerized to form a copolymer. As used herein a copolymer is a polymer comprising at least two different interpolymerized monomers (i.e., monomers not having the same chemical structure) and includes terpolymers (comprising three different monomers), and tetrapolymers (comprising four different monomers).

The copolymers of the disclosure comprise at least 65, 70, 75, 80, 83.5, 84, 85, or even 90 % by weight; at most 80, 83.5, 85, 90, 92, 94, or even 94.5 % by weight of a C₈ acrylic ester relative to the other monomers in the copolymer. A higher amount of the acrylic ester monomer relative to the other comonomers affords the pressure sensitive adhesive higher tack at low temperatures.

Low levels of a polar cross-linkable monomer may be used to increase the cohesive strength of the pressure sensitive adhesive. As used herein, the term "polar monomer" is a monomer whose homopolymer has a solubility of greater than 11.0 when measured according to the Fedors technique, as described by Fedors in Polym. Eng. and Sci., v. 14, p. 147 (1974). As used herein, the term "cross-linkable monomer" describes a monomer that has a group that is able to be cross-linked via electron beams, thermal treatment, ultraviolet (UV) irradiation, and combinations thereof.

In one embodiment, the polar cross-linkable monomer is an ethylenically unsaturated monomer having a cross-linkable group. As used herein, the term "ethylenically unsaturated monomer" describes a monomer capable of undergoing a free radical reaction when exposed to radicals generated by decomposition of a suitable initiator under heat and/or radiation, such as actinic radiation or e-beam radiation.

The ethylenically unsaturated monomer includes monomers having the following functional groups: hydroxyl, carboxyl, epoxy, acid amide, isocyanato or amino groups. Exemplary ethylenically unsaturated monomers include: 2-hydroxyethyl (meth)acrylate, 3-hydroxypropyl (meth)acrylate, 4-hydroxybutyl (meth)acrylate, 2-hydroxy-2-phenoxypropyl acrylate, acrylic acid (AA), and combinations thereof. Further examples include: cyanoethylacrylate, methacrylic acid, itaconic acid, fumaric acid, crotonic acid, citraconic acid, and maleic acid, β-carboxyethylacrylate, acrylamides, N,N-dialkylaminoalkyl (meth)acrylates, and combinations thereof.

Good low temperature applicability and performance are desirable for the pressure sensitive adhesives useful in the present disclosure. Higher levels of the polar cross-linkable monomer typically adversely affect low temperature performance (e.g., impact and tack) and tackifier miscibility and impair to adhesion to low surface energy substrates. In one embodiment, the adhesives of the present disclosure have good cold impact down to at least -10°C (14 °F), more preferably down to at least -17°C (0°F). Cold impact performance preferably is evaluated at temperatures of 0°C (32°F) or less, using ASTM D4272 or a similar test.

In the present disclosure, the polar cross-linkable monomer comprises at least 0.5, 1, 1.5, 2, 2.5, 3, 3.5, or even 3.8 % by weight; at most 1.5, 2, 2.5, 3, 3.5, 3.8, 4, 4.5, or even 5% by weight relative to the other monomers in the copolymer.

The non polar monomer may be a non polar ethylenically unsaturated monomer selected from monomers whose homopolymer has a solubility parameter as measured by acrylic the Fedors technique of not greater than 11.0 and other than the C8 acrylic ester. Exemplary non-polar monomers include: isophoryl acrylate, N-alkyl (meth)acrylamides (e.g., N-octyl methacrylamide), 3,3,5-trimethylcyclohexyl acrylate, 3,3,5-trimethylcyclohexyl methacrylate, cyclohexyl acrylate, cyclohexyl methacrylate, isobornyl (meth)acrylate, versatic acid glycidyl ester acrylic acid adduct, t-butylcyclohexylacrylate, methylacrylate, t-butylacrylate, methylmethacrylate, ethylmethacrylate, propylmethacrylate, tetrahydrofurfuryl acrylate, and combinations thereof.

In one embodiment, the cured adhesive composition (i.e., pressure sensitive adhesive) comprises at least two non polar monomers.

In the present disclosure, the non polar monomers in the copolymer comprises at least 5, 10, 15, 20, 25, 30, or even 35 % by weight; at most 10, 15, 20, 25, or even 30% by weight relative to the other monomers in the copolymer.

The copolymer may comprise further additional monomers. Examples include: 2-ethylhexyl methacrylate, n-octyl methacrylate, isooctyl methacrylate, butyl(meth)acrylate, isobutyl(meth)acrylate, n-pentyl (meth)acrylate, n-hexyl(meth)acrylate, lauryl(meth)acrylate, n-nonyl(meth)acrylate, copolymerizable aromatic ketone monomers , such as acryloyl benzophenone, phenoxyethyl acrylate, monoethylenically unsaturated mono-, di- and trialkoxy silane compounds, such as methacryloxypropyltrimethoxysilane, vinyldimethylethoxysilane, vinylmethyldiethoxysilane, vinyltriethoxysilane, vinyltrimethoxysilane, and vinyltriphenoxysilane, other vinyl containing compounds, such as N-vinyl lactams (e.g., N-vinyl pyrrolidone, and N-vinyl caprolactam), vinyl 4-vinylpyridine, N-vinylphthalimide, 2,3-dimethoxystyrene, vinylacetate, vinylformamide, and ethylvinylether, and combinations thereof.

The molecular weight and the molecular weight distribution of the copolymers used in the pressure sensitive adhesive may be key parameters to achieve high adhesion values on low surface energy surfaces as disclosed herein.

The copolymer of the present disclosure has a weight average molecular weight of at least 300,000; 400,000; 500,000, or even 600,000 grams per mole; at most 1,000,000; 1,250,000; 1,500,000; 1,750,000: 2,000,000; 2,200,000 or even 2,250,000 grams per mole. The molecular weight of the copolymer can be determined by gel permeation chromatography as is known in the art. The copolymer of the present disclosure typically has a molecular weight dispersity that can be calculated as the weight average molecular weight versus the number average molecular weight of the copolymer. The dispersity may be at least 4, 4.5, 5, 5.5, or even 6; at most 5.5, 6, 6.5, 7, 7.5, or even 8.

The inherent viscosity is related to the molecular weight of the copolymer, but also includes other factors, such as concentration of the polymer. In the present disclosure, the inherent viscosity of the copolymer may be at least 0.4, 0.45, 0.5, 0.6, 0.7, or even 0.8; at most 0.7, 0.8, 1.0, 1.2, 1.4, 1.6, 1.8, 2.0 or even 2.5 as measured in ethyl acetate at a concentration of 0.15 grams/deciliter (g/dL).

The molecular weight of the copolymer may be controlled using techniques known in the art. For example, during polymerization, a chain transfer agent may be added to the monomers to control the molecular weight.

Useful chain transfer agents include, for example, those selected from the group consisting of carbon tetrabromide, alcohols, mercaptans, and mixtures thereof. Exemplary chain transfer agents are isooctylthioglycolate and carbon tetrabromide. At least 0.01, 0.05, 0.1, 0.15, 0.2, 0.3, or even 0.4 parts by weight of a chain transfer agent may be used; at most 0.1, 0.2, 0.3, 0.4, 0.5, or even 0.6 parts by weight of a chain transfer agent may be used based upon 100 parts by weight of the total monomer mixture.

The copolymers used in the pressure sensitive adhesives of the present disclosure may be polymerized by techniques known in the art, including, for example, the conventional techniques of solvent polymerization, and emulsion or dispersion polymerization.

The copolymers of the present disclosure are polymerized in a solvent. The polymerization reaction can be carried out in any solvent suitable for organic free-radical reactions. The reactants can be present in the solvent at any suitable concentration. Examples of suitable solvents include aliphatic and alicyclic hydrocarbons (e.g., hexane, heptane, octane, nonane, cyclohexane), aromatics (e.g., benzene, toluene, xylene), esters (e.g., ethyl acetate, butyl acetate), ketones (e.g., acetone, methylethyl ketone, methyl isobutyl ketone), sulfoxides (e.g., dimethyl sulfoxide), amides (e.g., N,N-dimethylformamide, N,N-dimethylacetamide). The solvents can be used alone or as mixture (e.g., a mixture of heptane and ethyl acetate) or in combination with ethers (e.g., diethylether, glyme, diglyme, diisopropyl ether), or alcohols (e.g., ethanol, isopropyl alcohol),

The polymerization can be carried out in the presence of at least one free-radical initiator. Useful free-radical thermal initiators include, for example, azo, peroxide, persulfate, and redox initiators, and combinations thereof.

The polymerization reaction can be carried out at any temperature suitable for conducting an organic free-radical reaction. Particular temperature and solvents for use can be easily selected by those skilled in the art based on considerations such as the solubility of reagents, the temperature required for the use of a particular initiator and molecular weight desired. While it is not practical to enumerate a particular temperature suitable for all initiators and all solvents, generally suitable temperatures are between 30° C and 200° C.

In one embodiment of the present disclosure, a curable composition comprises the copolymer, a tackifier, and a cross-linking agent.

The tackifier must be miscible with the copolymer, such that macroscopic phase separation does not occur. Hydrocarbon based tackifiers are of low polarity and ordinarily are not miscible with conventional polar monomer containing adhesives. However, a non polar monomer may be incorporated to the adhesive to solvate the tackifier. The particular amount of tackifier depends on the composition of the acrylate-containing polymer and is generally selected to maximize the peel strength without compromising the shear strength.

The hydrogenated hydrocarbon tackifier may be added at a level of at least 30, 40, 50, 55, or even 60 parts; at most 40, 50, 55, 60, 65, or even 70 parts per 100 parts of the copolymer.

Optionally further tackifiers may be used in combination with the hydrogenated hydrocarbon tackifier. Exemplary additional tackifiers include: terpene phenol resins, (poly)terpenes and rosin esters and non-hydrogenated hydrocarbon resins. When used, the additional tackifiers will be added in amounts not exceeding 50% by weight of the total amount of tackifer.

Further additives may be added to the composition. Useful additives include plasticizers. Exemplary plasticizers include hydrocarbon oils (e.g., those that are aromatic, paraffinic, or naphtalenic) phthalates (e.g., terephthalate), phosphate esters, dibasic acid esters, fatty acid esters, polyethers (e.g., alkyl phenyl ether), epoxy resins, sebacate, adipate, citrate, trimellitate, dibenzoate, and combinations thereof. Optional plasticizer will typically be added in amounts less than 10 parts by weight.

A cross-linking agent is used to cure the curable composition. Useful cross-linking agents include thermal cross-linking agents. Exemplary thermal cross-linking agents include: melamine, di-carbonic acids/carbonic acid anhydrides, multifunctional aziridines, multifunctional isocyanates, oxazoles, metal chelates, amines, carbodiimides, oxazolidines, and epoxy compounds. In one embodiment, a cross-linking agent may be added into solvent-based pressure sensitive adhesives after polymerization and activated by heat during oven drying of the coated pressure sensitive adhesive.

Exemplary aziridines include: 1,1'-(1,3-phenylene dicarbonyl)-bis-(2-methylaziridine) (CAS No. 7652-64-4) referred to herein as "bisamide".

Bisamide cross-linking agents may be of the formula 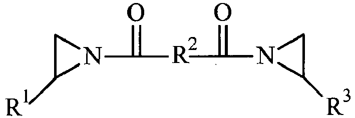 where,
R¹ and R³ are independently selected from the group consisting of H and CₙH₂ₙ₊₁, where n is an integer ranging from 1 to 5, R² is a divalent radical selected from the group consisting of phenyl, substituted phenyl, triazine, and -CₙH₂ₘ-, where m is an integer ranging from 1 to 10, and combinations thereof

Useful polyisocyanates include aliphatic, alicyclic, and aromatic diisocyanates, and mixtures thereof. A number of such diisocyanates are commercially available. Representative examples of suitable diisocyanates include hexamethylene diisocyanate (HDI), trimethyl hexamethylene diisocyanate (TMHDI), m- and p-tetramethylxylene diisocyanate (TMXDI), diphenylmethane diisocyanate (MDI), napthalene diisocyanate (NDI), phenylene diisocyanate, isophorone diisocyanate (IPDI), toluene diisocyanate (TDI), bis(4-isocyanatocyclohexyl) methane (H₁₂MDI), and mixtures thereof. Useful polyisocyanates also include derivatives of the above-listed monomeric polyisocyanates. These derivatives include, polyisocyanates containing biuret groups, such as the biuret adduct of hexamethylene diisocyanate (HDI) available from Bayer Corp., Pittsburgh, PA under the trade designation "DESMODUR N-100", polyisocyanates containing isocyanurate groups, such as that available from Bayer Corp., Pittsburgh, PA under the trade designation "DESMODUR N-3400" and "DESMODUR L-75", as well as polyisocyanates containing urethane groups, carbodiimide groups, and allophanate groups. If desired, small amounts of one or more polyisocyanates having three or more isocyanate groups can be added to effect a degree of cross-linking.

Multifunctional oxazoline cross-linking agents useful in this disclosure are those that contain two or more groups per molecule selected from the group consisting of 2-oxazolines, 2-oxazines and combinations thereof. Examples include: 1,3-oxazyl heterocyclic compounds, such as 1,3-oxazolines and 2-phenyl-2-oxazoline. Bisoxazolines are typically derived from polycarboxylic acids and such polycarboxylic acids include, aromatic acids; for example, isophthalic acid, terephthalic acid, 5-t-butylisophthalic acid, trimesic acid, 1,2,4,5-benzenetetracarboxylic acid and 2,6-naphthalene dicarboxylic acid. The preferred polycarboxylic acids include isophthalic acid, terephthalic acid and trimesic acid.

Polyfunctional 1,3-oxazyl heterocyclic compounds useful in this disclosure can be conveniently prepared by the reaction of the corresponding esters of a polycarboxylic acids and alkanolamines. Examples of poly(1,3-oxazyl heterocyclic) compounds including bisoxazolines having a nucleus represented by the following formula: 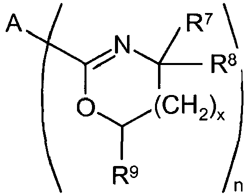 wherein A is selected from the group consisting of a cyclic or acyclic aliphatic or substituted cyclic or acyclic aliphatic moiety having from 1 to 20 carbon atoms or an aromatic (aryl) mono- or multinuclear or aliphatic substituted aryl residue having from 6 to 20 carbon atoms and a polymeric or oligomeric residue comprising from to 200,000 repeating units;
R⁷ independently represents H, CH₃, CH₂CH₃, or C₆H₅;
R⁸ and R⁹ independently represent H or CH₃, preferably R⁷ and R⁹ are not both CH₃;
x represents an integer of 0 or 1;
n is an integer of 2 or more, preferably 2 or 3.

Exemplary multifunctional oxazoline cross-linking agents include: 4,4'-5,5'-tetrahydro-2,2'-bisoxazole; 2,2'-(alkanediyl)bis[4,5-dihydrooxazole], for example, 2,2'-(1,4-butanediyl)bis[4,5-dihydrooxazole] and 2,2'-(1,2-ethanediyl)bis[4,5-dihydrooxazole]; 2,2'-(arylene)bis[4,5-dihydrooxazole], e.g., 2,2'-(1,4-phenylene)bis[4,5-dihydrooxazole]; 2,2'-(1,5-naphthalenyl)bis[4,5dihydrooxazole] and 2,2'-(1,8-anthracenyl)bis[4,5-dihydrooxazole]; sulfonyl, oxy, thio or alkylene bis 2-(arylene)[4,5-dihydrooxazole], for example, sulfonyl bis 2-(1,4-phenylene)bis[4,5-dihydrooxazole], oxybis 2-(1,4-phenylene)bis[4,5-dihydrooxazole], thiobis 2-(1,4-phenylene)bis[4,5-dihydrooxazole] and methylene bis 2-(1,4-phenylene)bis[4,5-dihydrooxazole]; 2,2',2"-(arylene tris [4,5-dihydrooxazole], e.g., 2,2',2"-(1,3,5-phenylene tris [4,5-dihydrooxazole]; 2,2',2",2"'-(arylene tetra[4,5-dihydrooxazole], for example, 2,2',2",2"'-(1,2,4,5-phenylene tetra[4,5-dihydrooxazole] and oligomeric and polymeric materials having terminal oxazoline groups.

In another embodiment, thermal cross-linking agents, which rely upon free radicals to carry out the cross-linking reaction, may be employed. Reagents such as, for example, peroxides serve as a source of free radicals. When heated sufficiently, these precursors will generate free radicals which bring about a cross-linking reaction of the polymer. A common free radical generating reagent is benzoyl peroxide. Free radical generators are required only in small quantities, but generally require higher temperatures to complete a cross-linking reaction than those required for the bisamide and isocyanate reagents.

Further useful cross-linking agents include photosensitive crossinking agents, which are activated by ultraviolet (UV) light. Another photosensitive cross-linking agent, which can be post-added to the solution polymer and activated by UV light is a triazine, for example, 2,4-bis(trichloromethyl)-6-(4-methoxy-phenyl)-s-triazine. These cross-linking agents are activated by UV light generated from sources such as medium pressure mercury lamps or a UV blacklight.

Aside from thermal, moisture, or photosensitive cross-linking agents, cross-linking may also be achieved using high-energy electromagnetic radiation such as gamma or e-beam radiation.

Exemplary cross-linking agents include: multifunctional alkylimine derivates, multifunctional metal chelates, (poly)isocyanates, endcapped (poly)isocyanates, amines, aziridines, melamine resins, di-carbonic acids/ carbonic acid anhydrides, and combinations thereof.

The cross-linking agent may be added at a level of at least 0.01, 0.08, 0.10, 0.11, 0.12, 0.15, 0.18, 0.2, 0.3, 0.5, 1.0, 1.5, 2.0, or even 2.5 part solid; at most 0.15, 0.2, 0.3 0.5, 1, 1.5, 2, 2.3, or even 3.0 part solid per 100 parts solid of the copolymer.

Other additives can be included in the polymerizable mixture or added at the time of compounding or coating to change the properties of the pressure sensitive adhesive. Such additives, include surface additives (flow additives), rheology additives, light protection additives, nanoparticles, degassing additives, antioxidants, pigments, fillers such as glass or polymeric bubbles or beads (which may be expanded or unexpanded), hydrophobic or hydrophilic silica, calcium carbonate, glass or synthetic fibers, toughening agents, reinforcing agents, fire retardants, antioxidants, and stabilizers. The additives are added in amounts sufficient to obtain the desired end properties.

If other additives are used, less than 2, 5, 10, 20, 25, 30, 35, or even 40% by weight based on the dry weight of the total adhesive would be suitable.

The curable composition can typically be prepared by mixing the copolymer(s), the cross-linking agent, the tackifier, and optionally additional tackifiers/plasticizers and/or other additives (if desired) in conventional processing equipment. The desired amounts of compounding ingredients and other conventional adjuvants or ingredients can be added to the curable composition and intimately admixed or compounded therewith by employing any of the conventional mixing devices such as extruders, static mixers, internal mixers, (e.g., Banbury mixers), two roll mills, or any other convenient mixing devices. The temperature of the mixture during the mixing process typically is kept safely below the cross-linking temperature of the composition. Thus, the temperature typically should not rise above about for example, room temperature, 30 °C, 40 °C, 50 °C, 60°C, 80°C, or even 100 °C. During mixing, it generally is desirable to distribute the components and adjuvants uniformly.

The amount of solvent in the compounded composition may be adjusted, depending on the application so as to obtain a desired viscosity of the composition. For example, in pressure sensitive adhesive applications, the viscosity may be adjusted to obtain a desired flow rate for further processing.

The curable compositions prepared in accordance with the present disclosure are easily coated upon a carrier film by conventional coating techniques to produce adhesive coated sheet materials in accordance with the present disclosure. The coating thickness will vary depending upon various factors such as, for example, the particular application, the coating formulation, and the nature of the carrier film (e.g., its absorbency, porosity, surface roughness, crepe, and chemical composition). Coating thicknesses of 10, 20, 25, 30, 40, 50, 60, 75, 100, 125 g/ m², or even 150 g/m² are contemplated. The curable adhesive composition may be of any desirable concentration for subsequent coating, but typically comprises at least 30%, 40%, 45 %, 50% 55% or even 60% solids; at most 50%, 55%, 60%, 65%, 70%, 75%, or even 80% solids with the remainder solvent. The desired concentration may be achieved by further dilution of the adhesive composition, or by partial drying.

Generally, the curable adhesive composition is coated onto a material, (e.g., a carrier film, a liner, or a web), herein referred to as a carrier film, and cross-linked via thermal activation. Temperatures for cross-linking include those at least 60 °C, 80 °C, 90 °C, 100 °C, 120 °C, 140 °C, or even 150 °C.

The carrier film may be a flexible or inflexible backing material. The flexible backing material may be any material conventionally utilized as a tape backing or any other flexible material.

Suitable materials useful as the carrier film for the adhesive articles of the disclosure include, polyolefins such as polyethylene, polypropylene (including isotactic polypropylene and high impact polypropylene), polystyrene, polyester, including poly(ethylene terephthalate), polyvinyl chloride, poly(butylene terephthalate), poly(caprolactam), polyvinyl alcohol, polyurethane, poly(vinylidene fluoride), cellulose and cellulose derivates, such as cellulose acetate and cellophane, and wovens and nonwovens. Commercially available carrier film include kraft paper (available from Monadnock Paper, Inc.); spun-bond poly(ethylene) and poly(propylene), such as those available under the trade designations "TYVEK" and "TYPAR" (available from DuPont, Inc.); and porous films obtained from poly(ethylene) and poly(propylene), such as those available under the trade designations "TESLIN" (available from PPG Industries, Inc.), and "CELLGUARD" (available from Hoechst-Celanese), prismatic film such as those available under the trade designation "3M DIAMOND GRADE DG3 REFLECTIVE SHEETING"(available from 3M Co., St. Paul, MN); and WAFT beaded film such as those available under the trade designation "3M SCHOTCHLITE FLEXIBLE REFLECTIVE SHEETING" (3M Co., St. Paul, MN).

The carrier film delivers the pressure sensitive adhesive of the present disclosure to the desired substrate. The carrier film may be blank or may comprise on the surface opposite the pressure sensitive adhesive, a pigment, indicia, text, design, and which is then fixedly attached to the surface of the substrate. In other words, the pressure sensitive adhesive composition is located between and in intimate contact with at least a portion of the substrate having a surface tension less than 50 mN/m and at least a portion of the carrier film.

The substrate of the present disclosure has a low surface energy surface and therefore good wetting of the substrate by the pressure sensitive adhesive is desirable. A low surface energy surface is defined herein as a surface that exhibits low polarity and a critical surface tension less than 50, 45, 43, 40, or even 30 mN/m. The surface tension may be measured as described by Owens et al. in the Journal of Applied Polymer Science, v. 13 p. 1741-1747 (1969). Exemplary substrates include: low density polyethylene (31 mN/m), polypropylene (28 mN/m), polystyrene (43 mN/m), polyvinyl chloride (39 mN/m), polyvinyl acetate, polyester, poly(meth)acrylates, such as polymethyl methacrylate (39 mN/m), and combinations thereof. Values taken from Owens *et al.* above Houwinck et al., in Adhesion and Adhesives, Elsevier Science, Amsterdam (1965). Other exemplary substrates include paints and clear coats (e.g., automotive clear coats). Examples of commercially available clear coats include: those available from BASF, Germany under the trade designation "UREGLOSS" and PPG Industries, Pittsburgh, PA under the trade designation "CERAMICLEAR5". These paints and clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further comonomers (e.g., styrene).

The pressure sensitive adhesives according to the present disclosure have particularly good adhesion to substrates having a low surface energy.

In one embodiment, the pressure sensitive adhesive has a peel value greater than 6 N/cm, 6.5 N/cm, 7 N/cm, or even 7.5 N/cm when tested according to FINAT test method No. 2 on a low density polyethylene.

In one embodiment, the pressure sensitive adhesive has a shear value greater than 2000, 2500, 3000, 3500, or even 4000 minutes when tested according to FINAT test method No. 8 on low density polyethylene.

The present disclosure selects particular combinations of monomers, tackifier, and cross-linking agent, which achieve superior performance on low surface energy surfaces. In one embodiment, the pressure sensitive adhesive of the present disclosure provides adequate performance on a variety of low surface energy substrates. For example, the pressure sensitive adhesive may be applied to a polyethylene surface and a painted surface and show adequate adhesion to both surfaces. In one embodiment, the pressure sensitive adhesive of the present disclosure has a peel strength of at least 6, 6.5, 7, 7.5, or even 8 N/cm when applied to multiple types of substrates each having a surface tension of less than 50 mN/m.

In one embodiment, the pressure sensitive adhesives of the present disclosure have the ability to adhere to a variety of surfaces under extreme conditions. The articles of the present disclosure can be subjected to harsh weather conditions such as temperature extremes, humidity, atmospheric pollutants, road salt, and infrared, visible, and ultraviolet light. For example, the pressure sensitive adhesives of the present disclosure may show good hot and low temperature shear, good low temperature flow and/or good aging.

In addition the pressure sensitive adhesive may be applied to surfaces with different topographies such as smooth and/or rough surfaces, which make bonding much more complex.

In some applications, organic fluids, such as oil or fuel may contact the substrate and/or the pressure sensitive adhesive and decrease the performance of the pressure sensitive adhesive. In one embodiment, the present pressure sensitive adhesive provides resistance to solvent, oil, and benzene/diesel.

The cross-linked tackified acrylic adhesives of the present disclosure surprisingly show good adhesion to a variety of low surface energy substrates and under a variety of complex bonding situations.

In one embodiment, the pressure sensitive adhesive comprises (a) a copolymer having (i) 80 to 86.5 wt % of isooctyl acrylate, (ii) 0.5 to 3 wt % acrylic acid, and (iii) 5 to 15 wt % of a cyclic aliphatic acrylate having a Tg greater than 60 and 2 to 8 wt % of a second monomer, which is a versatic acid derivative having a Tg less than 5; (b) 35 to 65 parts per 100 parts of the copolymer of a C₉ hydrogenated hydrocarbon resin having between 70 to 80% hydrogenation; and (c) 0.01 to 3 parts (solid/solid) (per 100 parts of the copolymer) of a bisamide cross-linking agent.

In one embodiment, the pressure sensitive adhesive comprises (a) a copolymer having (i) 80 to 85 wt % of isooctyl acrylate, (ii) 1 to 3 wt % acrylic acid, and (iii) 10 to 20 wt % of a cyclic aliphatic acrylate having a Tg greater than 60 and 2 to 8 wt % of a second monomer, which is a versatic acid derivative having a Tg less than 5; (b) 25 to 65 parts per 100 parts of the copolymer of a C₉ hydrogenated hydrocarbon resin having between 70 to 80% hydrogenation; and (c) 0.01 to 3 parts (solid/solid) (per 100 parts of the copolymer) of a bisamide cross-linking agent.

In one embodiment, the pressure sensitive adhesive comprises (a) a copolymer having (i) 80 to 85 wt % of isooctyl acrylate, (ii) 0.5 to 3 wt % acrylic acid, and (iii) 5 to 15 wt % of a cyclic aliphatic acrylate having a Tg greater than 60 and 2 to 15 wt % of a second monomer, which is a cyclic aliphatic acrylate having a Tg between 5 and 30; (b) 35 to 65 parts per 100 parts of the copolymer of a C₉ hydrogenated hydrocarbon resin having at least 50% hydrogenation; and (c) 0.01 to 3 parts (solid/solid) (per 100 parts of the copolymer) of a bisamide cross-linking agent.

In one embodiment, the pressure sensitive adhesive comprises (a) a copolymer having (i) 80 to 85 wt % of isooctyl acrylate, (ii) 0.5 to 4 wt % 4-hydroxybutyl acrylate, and (iii) 10 to 20 wt % of isobornyl acrylate; (b) 35 to 75 parts per 100 parts of the copolymer of a C₉ hydrogenated hydrocarbon resin having at least 50% hydrogenation; and (c) because the polyiscocyante cross-linking agent is a high molecular weight cross-linking agent, 0.1 to 3 parts (solid/solid) (per 100 parts of the copolymer) of this cross-linking agent is used.

In one embodiment, the pressure sensitive adhesive comprises (a) a copolymer having (i) 80 to 85 wt % of isooctyl acrylate, (ii) 0.5 to 2 wt % acrylic acid and 0.5 to 2 wt % hydroxybutyl acrylate, and (iii)10 to 20 wt % of isobornyl acrylate; (b) 35 to 65 parts per 100 parts of the copolymer of a C₉ hydrogenated hydrocarbon resin having at least 50% hydrogenation; and (c) if a bisamide cross-linking agent is used 0.01 to 3 parts (solid/solid) per 100 parts of the polymer is used, alternately, if a polyisocyanate cross-linking agent is used 0.1 to 3 parts (solid/solid) is used.

In one embodiment, the pressure sensitive adhesive comprises (a) a copolymer having (i) 77 to 89.5 wt % of isooctyl acrylate, (ii) 0.5 to 3 wt % acrylic acid and (iii))10 to 20 wt % of a cyclic aliphatic acrylate having a Tg greater than 60; (b) 35 to 65 parts per 100 parts of the copolymer of a C₉ hydrogenated hydrocarbon resin having at least 50% hydrogenation; and (c) 0.01 to 3 parts (solid/solid) (per 100 parts of the copolymer) of a bisamide cross-linking agent.

In one embodiment, the pressure sensitive adhesive comprises (a) a copolymer having (i) 77 to 89 (or 89.5) wt % of isooctyl acrylate, (ii) 0.5 to 3 wt % acrylic acid and (iii)10 to 20 wt % of a cyclic aliphatic acrylate with a Tg between 5 and 30 or ; (b) 35 to 65 parts per 100 parts of the copolymer of a C9 hydrogenated hydrocarbon resin having at least 50% hydrogenation; and (c) 0.01 to 3 parts (solid/solid) (per 100 parts of the copolymer) of a bisamide cross-linking agent.

Described below are various embodiments of the present disclosure:
Item 1. An cured adhesive composition comprising:
   (a) a copolymer comprising the reaction product of:
      i) 65 to 94.5 wt % of a C₈ acrylate ester,
      ii) 0.5 to 5 wt % of a polar cross-linkable monomer, and
      iii) 5-30 wt % of a non polar monomer;
      wherein the copolymer has a weight average molecular weight of 400,000 to 2,200,000 grams/mole and wherein the reaction is in the presence of a solvent;
   (b) 30 to 70 parts of a hydrogenated hydrocarbon tackifier per 100 parts of the copolymer; and
   (c) 0.01 to 3 parts (solid/solid) of a cross-linking agent per 100 parts of the copolymer;
   wherein the cured adhesive has a peel value greater than 6 N/cm when tested according to FINAT test method No. 2 on a low density polyethylene; and further wherein the cured adhesive has a shear value greater than 2000 minutes when tested according to FINAT test method No. 8 on a low density polyethylene.
Item 2. A cured adhesive according to item 1, wherein the adhesive has a molecular weight dispersity of 4 to 8.
Item 3. A cured adhesive according to any one of the previous items, wherein the copolymer has an inherent viscosity of 0.4 to 2.
Item 4. A cured adhesive according to any one of the previous items, wherein the C₈ acrylate ester is selected from: isooctyl acrylate, 2-ethylhexyl acrylate, and combinations thereof.
Item 5. A cured adhesive according to any one of the previous items, wherein the C₈ acrylate ester is 80 to 90 wt %.
Item 6. A cured adhesive according to any one of the previous items, wherein the cross-linkable monomer is an ethylenically unsaturated monomer.
Item 7. A cured adhesive according to item 6, wherein the polar ethylenically unsaturated monomer is selected from: acrylic acid, 4-hydroxybutyl acrylate, 2-hydroxyethyl acrylate, 3-hydroxypropyl acrylate, 2-hydroxy-2-phenoxypropyl acrylate, and combinations thereof. Item 8. A cured adhesive according to any one of claims 6-7, wherein the polar ethylenically unsaturated monomer is 1 to 2 wt %.
Item 9. A cured adhesive according to any one of the previous items, wherein the copolymer comprises at least two non polar monomers.
Item 10. A cured adhesive according to any one of the previous items, wherein the non polar monomer is selected from: isobornyl acrylate, versatic acid glycidyl ester acrylic acid adduct, isophoryl acrylate, t-butylcyclohexyl acrylate, cyclohexyl acrylate, tetrahydrofurfuryl acrylate, N-octylacrylamide, methyl acrylate, or combinations thereof. Item 11. A cured adhesive according to any one of the previous items, wherein the non polar monomers are 10 to 20 wt. %.
Item 12. A cured adhesive according to any one of the previous items, wherein the hydrogenated hydrocarbon tackifier is a C₉.
Item 13. A cured adhesive according to any one of the previous items, wherein the hydrogenated hydrocarbon tackifier is 40-60 parts per 100 parts of the copolymer.
Item 14. A cured adhesive according to any one of the previous items, wherein the cross-linking agent is selected from: multifunctional alkylimine derivates, multifunctional metal chelates, (poly)isocyanates, endcapped (poly)isocyanates, amines, aziridines, melamine resins, di-carbonic acids/ carbonic acid anhydrides, and combinations thereof.
Item 15. A cured adhesive according to any one of the previous items, wherein the cross-linking agent is 0.05 to 0.15 (solid/solid) parts per 100 parts of the copolymer copolymer. Item 16. A cured adhesive according to any one of the previous items, wherein the cured adhesive further comprises an additive selected from: surface additives (flow additives), rheology additives, light protection additives, nanoparticles, degassing additives, antioxidants, or combinations thereof.
Item 17. An article comprising the cured adhesive of any one of the previous items and a substrate having a surface tension less than 50 mN/m.
Item 18. The article according to item 17, wherein the substrate is selected from: polypropylene, polyethylene, polystyrene, polyvinyl chloride, polyvinyl acetate, polyester, poly(meth)acrylates, a paint, a clearcoat, or combinations thereof.
Item 19. The article according to any one of items 17-18, further comprising a carrier film.
Item 20. A method of making an article comprising:
   (a) polymerizing (i) 65 to 94.5 wt % of a C₈ acrylate ester; (ii) 0.5 to 5 wt % of a polar cross-linkable monomer, and (iii) 5-30 wt % of a non polar monomer in a solvent to form a copolymer;
   (b) adding to the copolymer: (i) 30 to 70 parts of a hydrogenated hydrocarbon tackifier per 100 parts copolymer; and (ii) 0.01 to 3 parts (solid/solid) of a cross-linking agent per 100 parts of the copolymer to form a curable adhesive composition;
   (c) curing the curable adhesive composition; and
   (d) contacting the cured adhesive composition between a substrate having a surface tension less than 50 mN/m and a carrier film.

### Examples

Advantages and embodiments of this disclosure are further illustrated by the following examples, but the particular materials and amounts thereof recited in these examples, as well as other conditions and details, should not be construed to unduly limit this disclosure. In these examples, all percentages, proportions and ratios are by weight unless otherwise indicated.

All materials are commercially available, for example from Sigma-Aldrich Corporation, St. Louis, MO, or known to those skilled in the art unless otherwise stated or apparent.

### Materials employed:

| Abbreviation | Name | Available from |
|---|---|---|
| IOA | Isooctylacrylate | Synthesis from isooctyl alcohol and acrylic acid |
| IBOA | Isobornylacrylate sold under the trade designation "SR 506D" | Sartomer Co. (Cray Valley, France) |
| AA | Acrylic acid | BASF, Germany |
| Abbreviation | Name | Available from |
| ACE | ACE ™Hydroxylacrylate monomer, monoacrylate based on a reaction product of acrylic acid and CARDURA E 10P (glycidyl ester of VERSATIC acid) | Hexion Specialty Chemicals, Belgium |
| IPHA | Isophorylacrylate sold under the trade designation "CD 420 | Sartomer Co. (Cray Valley, France) |
| MA | Methyl acrylate | Archema, Colombes, France |
| 4-HBA | 4-hydroxybutyl acrylate | BASF, Germany |
| BA | Butyl acrylate | BASF, Germany |
| TACK1 | Tackifier 1: Hydrocarbon resin sold under the trade designation "REGALITE R-7100" dissolved in n-heptane to make a 60 % by weight | Eastman Chemical Co., Middelburg Netherlands |
| TACK-2 | Tackifier 2: Hydrocarbon resin sold under the trade designation "REGALITE S-5100" dissolved in n-heptane to make a 60 % by weight | Eastman Chemical Co., Middelburg Netherlands |
| TACK-3 | Tackifier 3: Hydrocarbon resin sold under the trade designation "REGALITE R-9100" dissolved in n-heptane to make a 60 % by weight | Eastman Chemical Co., Middelburg Netherlands |
| TACK-4 | Tackifier 3: Liquid aliphatic hydrocarbon resin (100%) sold under the trade designation "PICCOTAC 1020E" | Eastman Chemical Co., Kingsport US |
| C-TACK-1 | Comparative tackifier-1: Synthetic glycerol ester of a highly hydrogenated refined wood rosin sold under the trade designation "FORAL 85E" dissolved in n-heptane to make a 60 % by weight | Eastman Chemical Co., Kingsport US |
| C-TACK-2 | Comparative tackifier-2: Terpene phenolic resin sold under the trade designation "SP-553" dissolved in n-heptane to make a 60 % by weight | SI-Group, Bethune France |
| XL-1 | 5 % solution of isophthaloyl-bis-(propyleneimine) in a solvent mixture of toluene/isopropyl alcohol | U.S. Pat. No. 5,861,211 |
| XL-2 | Cross-linking agent 2: solvent free low viscosity aliphatic polyisocyanate resin based on hexamethylene diisocyanate sold under the trade designation "DESMODUR N 3400" | Bayer MaterialScience, Pittsburgh, PA |
| V 601 | Dimethyl 2,2'-azobis(2-methylpropionate) | Wako Co. Neuss, Germany |

### Synthesis of the copolymers: general procedure

Copolymers (ACRYL) and comparative copolymers (C-ACRYL) were prepared from monomers in amounts (weight % (wt %)) as is given in table 1.

General procedure: A glass bottle was charged with the monomers. Ethylacetate and heptane were added to obtain a 45% solids reaction mixture. The ratio of ethylacetate/heptane was selected in function of the desired molecular weight. 0.2% (relative to the weight of the monomers) of thermal initiator (V 601, used as a 1% solution in ethylacetate) was added. The bottle was degassed with nitrogen at 1.0 liter per minutes (L/min) for 3 min and sealed. The reaction was run during 20 hrs (hours) in a launder-o-meter at 55°C. A conversion of 98-99% was obtained.

After the reaction was completed, inherent viscosity (IV), as a measure of molecular weight, was measured with a Canon-Fenske viscosimeter at 25°C at a concentration of 0.15 gram/deciliter in ethylacetate.

**Table 1: Composition of acrylic copolymers**

| | IOA | AA | 4-HBA | IPHA | IBOA | ACE | MA | BA | IV |
|---|---|---|---|---|---|---|---|---|---|
| Acryl-1 | 83.5 | 1.5 | / | / | 10 | 5 | / | / | 0.78 |
| Acryl- 2 | 85.5 | 1.5 | / | / | 13 | / | / | / | 0.78 |
| Acryl- 3 | 85 | 2 | / | / | 13 | / | / | / | 0.75 |
| Acryl -4 | 83.5 | 1.5 | / | 15 | / | / | / | / | 0.82 |
| Acryl-5 | 83.5 | 1.5 | / | 5 | 10 | / | / | / | 0.82 |
| Acryl-6 | 83.5 | 1.5 | / | / | 13 | / | 2 | / | 0.82 |
| Acryl-7 | 80.5 | 1.5 | / | / | 13 | / | 5 | / | 0.89 |
| Acryl-8 | 85 | / | 2 | / | 13 | / | / | / | 0.76 |
| Acryl-9 | 84 | 1 | 2 | / | 13 | / | / | / | 0.82 |
| Acryl-10 | 83.5 | 1.5 | / | / | 10 | 5 | / | / | 1.44 |
| C-acryl-1 | 98.5 | 1.5 | / | / | / | / | / | / | 0.76 |
| C-acryl-2 | 85 | / | / | / | 10 | 5 | / | / | 0.73 |
| C-acryl-3 | / | 1.5 | / | / | 10 | 5 | / | 83.5 | 0.84 |
| Acryl-11 | 85.5 | 1.5 | / | / | 13 | / | / | / | 2.05 |
| C-acryl-4 | 86.8 | 0.2 | / | / | 13 | / | / | / | 0.75 |
| C-acryl-5 | 77 | 10 | / | / | 13 | / | / | / | 0.75 |
| C-acryl-6 | 94.5 | 1.5 | / | / | 4 | / | / | / | 0.81 |
| C-acryl-7 | 58.5 | 1.5 | / | / | 40 | / | / | / | 0.64 |
| C-acryl-8 | 97 | 1.5 | / | / | 1.5 | / | / | / | 0.83 |
| C-acryl-9 | 60 | 5 | / | / | 35 | / | / | / | 0.77 |
| C-acryl-10 | 58.5 | 1.5 | / | / | 40 | / | / | / | 0.72 |
| C-acryl-11 | 83.5 | 1.5 | / | / | 10 | 5 | / | / | 0.57 |
| C-acryl-12 | 83.5 | 1.5 | / | / | 10 | 5 | / | / | 0.48 |

| | | | | | | | | | |
|---|---|---|---|---|---|---|---|---|---|
| / : not added | | | | | | | | | |

### Preparation of pressure sensitive adhesive tapes

The copolymer solutions obtained as described above were mixed with a tackifier solution and a cross-linking agent solution as indicated in the respective examples.

After homogenization at the roller mill for 1 hr the tackifier solution was added and then the mixture was homogenized for 24 hrs. Then the cross-linking agent was added and the resulting mixture was homogenized for 1 hr. The adhesive solution was coated on a silicone coated polyester liner and cured for 10 min at room temperature and 3 min at 100 °C. The coating weight was 50 g/m² (gram/meter²). The construction was then laminated on a polyester carrier film.

### Substrates:

The adhesives were tested for their adhesive properties on the following substrates:
Sub 1: Polyethylene film 13 mils (330 micrometers) thick prepared in-house from polyethylene pellets available under the trade designation "VORIDIAN POLYETHYLENE 1550P" available from Eastman Chemical Co., Kingsport, TN. was fixed on an aluminium plate (150cm x 50 x 2 mm), and testing was done on the rough side (Rz-value: 13 µm; tested via DIN Norm, lₜ = 5,6 mm, l_{c} = 0,8 mm).
Sub 2: Polypropylene plates from available under the trade designation "PPTV20" from Montaplast, Germany, were used having a roughness of (Rz-value: 21 µm; tested via DIN Norm, lₜ = 5,6 mm, l_{c} = 0,8 mm).
Sub 3: CeramiClear 5 Clearcoat from PPG Industries - acrylic-based clear coat with a low surface energy.

Prior to applying the adhesive, the test panels (except Sub 1) were cleaned using a mixture of isopropylalcohol:distilled water (1:1). The cleaned panels were dried using a tissue.

### Test methods:

A strip of 25 mm wide and more than 175 mm length was cut out in the machine direction from the coated pressure sensitive adhesive sample. The backing was removed from the strip and the strip was placed on a clean test plate, with the adhesive side down, using light finger pressure. The standard FINAT test roller (2 kg) was rolled twice in each direction at a speed of approximately 10 mm per second to obtain intimate contact between the adhesive mass and the substrate surface. After applying the strip to the test plate, the test plate was left at room temperature for a period of 24 hr before testing. The test plate and strip were fixed into the horizontal support, which has been secured into the bottom jaw of the tensile tester. The testing machine (Zwick/Roell Z020, Ulm, Germany) was set at 300 mm (millimeter) per minute jaw separation rate. Test results are expressed in Newton per cm (centimeter). The quoted peel values are the average of three 90°-peel measurements.

### Static shear test @ ROOM TEMPERATURE with 1kg (FINAT Test Method no.8)

A strip of 25 mm wide and more than 175 mm long was cut in machine direction from the adhesive sample. A loop was prepared at one end of the strip in order to hold the specified weight. The strip was attached to the edge of the panel using the opposite end to the loop. The strip was attached precisely and bubble free so, as to obtain a bonded area of 25 x 25 mm. The standard FINAT test roller (2 kg) was rolled twice in each direction at a speed of approx. 10 mm per second to obtain intimate contact between the adhesive mass and the substrate surface. After a dwell time between 5 and 10 min, the test panel was placed in the shear stand of the testing equipment (test plate held at 2°) and the specified load of 1 kg was placed in the loop of the sample. The timer was started. The test was stopped at failure and the test results were expressed in minutes. The failure mode is indicated as [CF] (cohesive failure) or [CP] (clean panel). The quoted static shear values are the average of three shear measurements. The test was stopped after 10000 min. Samples that did not fail are reported as 10000+.

### Examples 1 to 10 and 39 and comparative examples C-1 to C-6 and C-12 to C-20

In examples 1 to 10, adhesive formulations were prepared from 100 parts copolymer Acryl-1 with cross-linking agent XL-1 and tackifier TACK-1 in amounts as indicated in table 2. Adhesive formulations from the comparative examples C-1 to C-6 and C-12 to C-20 and Example 39 were made with 100 parts copolymer as indicated in table 2, cross-linking agent XL-1 and Tackifier TACK-1 in amounts as given in table 2. The adhesive compositions were coated and cured according to the general procedure. The adhesives were tested according to 90° Peel Finat No 2 and Static Shear Finat No 8 tests. The results are given in table 2.

**Table 2**

| Ex | Copolymer | Parts TACK-1 | Parts XL-1 | Finat No 2.90° peel (N/cm) | | | Finat No 8 Shear (min) [Failure] |
|---|---|---|---|---|---|---|---|
| | | | | Sub 1 | Sub 2 | Sub 3 | Sub 1 |
| 1 | Acryl-1 | 35 | 0.12 | 6.78 | 6.11 | 6.54 | 3893 [CP] |
| 2 | Acryl-1 | 40 | 0.08 | 9.80 | 7.40 | 3.70^{*} | 5670 [CP] |
| 3 | Acryl-1 | 40 | 0.09 | 8.93 | 7.17 | 4.94^{*} | 5084 [CP] |
| 4 | Acryl-1 | 40 | 0.12 | 8.21 | 6.46 | 5.45* | 4891[CP] |
| 5 | Acryl-1 | 40 | 0.15 | 7.17 | 5.83 | 5.43* | 4643 [CP] |
| 6 | Acryl-1 | 40 | 0.18 | 7.58 | 6.48 | 3.88* | 7197 [CP] |
| 7 | Acryl-1 | 45 | 0.12 | 9.19 | 6.59 | 4.95* | 7028 [CP] |
| 8 | Acryl-1 | 50 | 0.12 | 10.70 | 7.90 | 3.46* | 10000+ |
| 9 | Acryl-1 | 50 | 0.15 | 8.90 | 6.87 | 3.64* | 10000+ |
| 10 | Acryl-1 | 60 | 0.12 | 10.90 | 7.72 | 2.84* | 10000+ |
| C-1 | C-acryl-1 | 40 | 0.08 | 7.11 | 6.27 | 9.51 | 9 [CF] |
| C-2 | C-acryl-1 | 40 | 0.10 | 6.65 | 4.97 | 7.64 | 13 [CF] |
| C-3 | C-acryl-2 | 40 | 0.12 | 6.15 | 6.79 | 8.73 | 13 [CF] |
| C-4 | C-acryl-2 | 50 | 0.12 | 6.89 | 7.41 | 9.5 | 24 [CF] |
| C-5 | C-acryl-3 | 50 | 0.12 | 4.70 | 3.16 | 3.12 | 262 [CF] |
| C-6 | Acryl-1 | 40 | 0.06 | 7.51 | 6.80 | 5.89* | 130 [CF] |
| 39 | Acryl-11 | 40 | 0.09 | 5.94 | 5.45 | 9.01 | 6799 [CP] |
| C-12 | C-acryl-4 | 40 | 0.09 | 6.75 | 7.66 | 12.51 | 15 [CF] |
| C-13 | C-acryl-5 | 40 | 0.09 | 1.22 | 0.77 | 1.39 | 10000+ |
| C-14 | C-acryl-6 | 40 | 0.09 | 7.75 | 6.49 | 10.45 | 30 [CF] |
| C-15 | C-acryl-7 | 40 | 0.09 | 0.39 | 0.72 | 0.35 | 3946 [CP] |
| C-16 | C-acryl-8 | 40 | 0.09 | 0.33 | 0.37 | 0.29 | 10000+ |
| C-17 | C-acryl-9 | 40 | 0.09 | 0.16 | 0.39 | 0.66 | 56 [CP] |
| C-18 | C-acryl-10 | 40 | 0.09 | 0.27 | 0.69 | 0.57 | 4731 [CP] |
| C-19 | C-acryl-11 | 40 | 0.09 | 10.71 | 7.83 | 12.73 | 107 [CF] |
| C-20 | C-acryl-12 | 40 | 0.09 | 13.76 | 8.43 | 9.06 | 21 [CF] |

| | | | | | | | |
|---|---|---|---|---|---|---|---|
| * : shocky peel | | | | | | | |

### Examples 11 to 18 and Comparative Example C-7

In Examples 11 to 18 and comparative example C-7, adhesive formulations were prepared from 100 parts copolymer Acryl-2 with crosslinker XL-1 and tackifier TACK-1 in amounts as indicated in table 3. The adhesive compositions were coated and cured according to the general procedure. The adhesives were tested according to 90° Peel Finat No 2 and Static shear Finat No 8 tests. The results are given in table 3.

**Table 3:**

| Ex | Parts TACK-1 | Parts XL-1 | Finat No 2. 90° peel (N/cm) | | | Finat No 8 Shear (min) [failure] |
|---|---|---|---|---|---|---|
| | | | Sub 1 | Sub 2 | Sub 3 | Sub 1 |
| 11 | 35 | 0.12 | 6.61 | 5.49 | 5.11* | 4028 [CP] |
| 12 | 40 | 0.08 | 9.20 | 6.5 | 3.52* | 6420 [CP] |
| 13 | 40 | 0.12 | 7.41 | 6.25 | 4.42* | 6482 [CP] |
| 14 | 40 | 0.15 | 7.01 | 5.81 | 3.02* | 3070 [CP] |
| 15 | 40 | 0.18 | 7.20 | 4.89 | 4.55* | 4153 [CP] |
| 16 | 45 | 0.12 | 7.91 | 6.41 | 2.92* | 10000+ |
| 17 | 50 | 0.12 | 10.08 | 7.45 | 2.49* | 10000+ |
| 18 | 60 | 0.12 | 9.64 | 6.44 | 1.47* | 10000+ |
| C-7 | 40 | 0.06 | 7.55 | 6.98 | 4.07* | 61 [CF] |

| | | | | | | |
|---|---|---|---|---|---|---|
| * : shocky peel | | | | | | |

### Examples 19 to 30 and comparative examples C-8 and C-9

In examples 19 to 30 and comparative examples C-8 and C-9, adhesive formulations were prepared from 100 parts copolymer, as given in table 4, crosslinker XL-1 and tackifier TACK-1 in amounts as indicated in table 4. The adhesive compositions were coated and cured according to the general procedure. The adhesives were tested according to 90° Peel Finat No 2 and Static Shear Finat No 8 tests. The results are given in table 4.

**Table 4**

| Ex | Copolymer | Parts TACK-1 | Parts XL-1 | Finat No 2. 90° peel (N/cm) | | | Finat No 8 Shear (min) [Failure] |
|---|---|---|---|---|---|---|---|
| | | | | Sub 1 | Sub 2 | Sub 3 | Sub 1 |
| 19 | Acryl-3 | 40 | 0.09 | 7.59 | 6.67 | 4.84* | 2103 [CF] |
| 20 | Acryl-3 | 40 | 0.12 | 6.95 | 7.15 | 4.57* | 4007 [CP] |
| 21 | Acryl-3 | 50 | 0.12 | 8.47 | 6.7 | 3.95* | 10000+ |
| 22 | Acryl-4 | 40 | 0.09 | 7.32 | 6.52 | 4.9* | 4804 [CP] |
| 23 | Acryl-4 | 40 | 0.12 | 7.34 | 6.19 | 7.0* | 2100 [CP] |
| 24 | Acryl-4 | 50 | 0.12 | 8.26 | 5.85 | 3.68* | 10000+ |
| 25 | Acryl-5 | 40 | 0.12 | 7.41 | 6.24 | 4.2* | 4272 [CP] |
| 26 | Acryl-6 | 40 | 0.09 | 7.11 | 6.03 | 5.09* | 6806 [CP] |
| 27 | Acryl-6 | 50 | 0.12 | 8.55 | 6.88 | 2.68* | 10000+ |
| 28 | Acryl-7 | 40 | 0.10 | 7.50 | 5.53 | 2.72* | 10000+ |
| 29 | Acryl-10 | 40 | 0.18 | 6.74 | 5.84 | 6.46 | 3288 [CP] |
| 30 | Acryl-10 | 50 | 0.18 | 7.76 | 6.61 | 4.60* | 4763 [CP] |
| C-8 | Acryl-10 | 40 | 0.25 | 6.22 | 5.50 | 6.14 | 1867 [CP] |
| C-9 | Acryl-10 | 35 | 0.25 | 5.73 | 4.91 | 5.91 | 733 [CP] |

| | | | | | | | |
|---|---|---|---|---|---|---|---|
| * : shocky peel. | | | | | | | |

### Examples 31 to 33 and comparative examples C-10 and C-11

In examples 31 to 33 and comparative examples C-10 and C-11, adhesive formulations were prepared from 100 parts copolymer Acryl-2 with 0.12 parts cross-linking agent XL-1 and tackifiers or comparative tackifiers, as specified and in amounts as indicated in table 5. The adhesive compositions were coated and cured according to the general procedure. The adhesives were tested according to 90° Peel Finat No 2 and Static Shear Finat No 8 tests. The results are given in table 6.

**Table 5: Tackified adhesive compositions**

| Tackifier | Ex 31 | Ex 32 | Ex 33 | C-10 | C-11 |
|---|---|---|---|---|---|
| TACK-1 | / | 50 | / | / | / |
| TACK-2 | 50 | / | / | / | / |
| TACK-3 | / | / | 50 | / | / |
| TACK-4 | / | 5 | / | / | / |
| C-TACK-1 | / | / | / | / | 50 |
| C-TACK-2 | / | / | / | 50 | / |

| | | | | | |
|---|---|---|---|---|---|
| /: not added | | | | | |

**Table 6 Properties of tackified adhesives**

| Ex | Finat No 2. 90° peel | | | Finat No 8 Shear |
|---|---|---|---|---|
| | (N/cm) | | | (min) [Failure mode] |
| | Sub 1 | Sub 2 | Sub 3 | Sub 1 |
| 31 | 7.26 | 7.06 | 5.76* | 10000+ |
| 32 | 10.44 | 8.3 | 8.57* | 3587 [CP] & [CF] |
| 33 | 9.58 | 7.81 | 7.16* | 10000+ |
| C-10 | 3.3 | 7.6 | 1.49* | 546 [CF] |
| C-11 | 5.78 | 5.87 | 8.2 | 25 [CF] |

### Examples 34 to 36

In examples 34 to 36, adhesive formulations were prepared from 100 parts copolymer Acryl-8 or Acryl-9, respectively, and 50 parts tackifier TACK-1. Examples 32 and 33 further contain 0.19 parts cross-linking agent XL-2, whereas example 34 contains 0.12 parts cross-linking agent XL-1. The adhesive compositions were coated and cured according to the general procedure. The adhesives were tested according to 90° Peel Finat No 2 and Static Shear Finat No 8 tests. The results are given in table 7.

**Table 7**

| Ex | Acryl | XL | Finat No 2. 90° peel (N/cm) | | | Finat No 8 Shear (min) [Failure mode] |
|---|---|---|---|---|---|---|
| | | | Sub 1 | Sub 2 | Sub 3 | Sub 1 |
| 34 | Acryl-8 | 0.19 parts XL-2 | 8.52 | 7.64 | 11.82 | 2342 [CP] |
| 35 | Acryl-9 | 0.19 parts XL-2 | 8.48 | 6.58 | 4.95* | 10000+ |
| 36 | Acryl-9 | 0.12 parts XL-1 | 8.73 | 8.03 | 3.46* | 10000+ |

### Examples 37 and 38

Example 37 was prepared from 100 parts copolymer Acryl-2, 40 parts tackifier TACK-1 and 0.1 parts agent XL-1. Example 38 was prepared from 100 parts copolymer Acryl-1, 40 parts tackifier TACK-1 and 0.08 parts agent XL-1. The adhesive compositions were coated and cured according to the general procedure, but the coating weight was about 60 g/m². After curing, the adhesive was laminated against a polyurethane reinforced with polyester film sold under the trade designation "3M 7870E HIGH DURABILITY THERMAL TRANSFER" from 3m Co., St. Paul, MN. After the adhesive was applied according to the 90° Peel Finat No 2 test method, the sample was dwelled for 24 hours and tested. Then the samples were immersed in motor oil at 70°C for 24 hours or in diesel at room temperature for 24 hours. The samples were left at room temperature for 1 hour before the 90° peel adhesion was measured. The results are given in table 8.

**Table 8: Finat No 2. 90° peel (N/cm) test**

| Finat No 2. 90° peel (N/cm) | Ex 37 | Ex 38 |
|---|---|---|
| Sub 2 | 7.1 | 7.8 |
| Sub 2 after motor oil | 5.9 | NA |
| Sub 2 after diesel | 5.7 | 6.2 |
| Sub 3 | 7.1 | 7.7 |
| Sub 3 after motor oil | 6.2 | NA |
| Sub 3 after diesel | 5.7 | 6.4 |

| | | |
|---|---|---|
| NA: not available | | |

## Claims

1. A cured adhesive composition comprising:
(a) a copolymer comprising the reaction product of:
i) 65 to 94.5 wt % of a C₈ acrylate ester,
ii) 0.5 to 5 wt % of a polar cross-linkable monomer, and
iii) 5-30 wt % of a non polar monomer;
wherein the copolymer has a weight average molecular weight of 400,000 to 2,200,000 grams/mole and wherein the reaction is in the presence of a solvent;
(b) 30 to 70 parts of a hydrogenated hydrocarbon tackifier per 100 parts of the copolymer; and
(c) 0.01 to 3 parts (solid/solid) of a cross-linking agent per 100 parts of the copolymer;
wherein the cured adhesive has a peel value greater than 6 N/cm when tested according to FINAT test method No. 2 on a low density polyethylene; and further wherein the cured adhesive has a shear value greater than 2000 minutes when tested according to FINAT test method No. 8 on a low density polyethylene.

2. A cured adhesive according to claim 1, wherein the adhesive has a molecular weight dispersity of 4 to 8.

3. A cured adhesive according to claim 1, wherein the copolymer has an inherent viscosity of 0.4 to 2.

4. A cured adhesive according to claim 1, wherein the C₈ acrylate ester is 80 to 90 wt %.

5. A cured adhesive according to claim 1, wherein the cross-linkable monomer is an ethylenically unsaturated monomer.

6. A cured adhesive according to any one of the previous claims, wherein the polar ethylenically unsaturated monomer is 1 to 2 wt %.

7. A cured adhesive according to claim 1, wherein the copolymer comprises at least two non polar monomers.

8. A cured adhesive according to claim 1, wherein the non polar monomers are 10 to 20 wt. %.

9. A cured adhesive according to claim 1, wherein the hydrogenated hydrocarbon tackifier is 40-60 parts per 100 parts of the copolymer.

## Patentansprüche

1. Gehärtete Klebstoffzusammensetzung, die Folgendes umfasst:
(a) ein Copolymer, das das Reaktionsprodukt aus Folgendem umfasst:
i) zu 65 bis 94,5 Gew.-% ein Cs-Acrylatester
ii) zu 0,5 bis 5 Gew.-% ein polares vernetzbares Monomer, und
iii) zu 5-30 Gew.-% ein nichtpolares Monomer;
wobei das Copolymer ein durchschnittliches Molekulargewicht von 400.000 bis 2.200.000 Gramm/Mol aufweist und wobei die Reaktion bei Vorhandensein eines Lösemittels erfolgt;
(b) zu 30 bis 70 Anteile eines hydrierten Kohlenwasserstoff-Klebrigmachers pro 100 Anteilen des Copolymers; und
(c) zu 0,01 bis 3 Anteile (Feststoff/Feststoff) ein Vernetzungsmittel pro 100 Anteilen des Copolymers;
wobei der gehärtete Klebstoff einen Schälwert von mehr als 6 N/cm bei Prüfung gemäß dem FINAT-Prüfverfahren Nr. 2 bei einem Hochdruck-Polyethylen mit geringer Dichte aufweist; und wobei ferner der gehärtete Klebstoff einen Schälwert von mehr als 2000 Minuten bei Prüfung gemäß dem FINAT-Prüfverfahren Nr. 2 bei einem Hochdruck-Polyethylen mit geringer Dichte aufweist.

2. Gehärteter Klebstoff nach Anspruch 1, wobei der Klebstoff eine Molmassendispersität von 4 bis 8 aufweist.

3. Gehärteter Klebstoff nach Anspruch 1, wobei das Copolymer eine inhärente Viskosität von 0,4 bis 2 aufweist.

4. Gehärteter Klebstoff nach Anspruch 1, wobei das C₈-Acrylatester 80 bis 90 Gew.-% beträgt.

5. Gehärteter Klebstoff nach Anspruch 1, wobei das vernetzbare Monomer ein ethylenisch ungesättigtes Monomer ist.

6. Gehärteter Klebstoff nach einem der vorhergehenden Ansprüche, wobei das polare ethylenisch ungesättigte Monomer 1 bis 2 Gew.-% beträgt.

7. Gehärteter Klebstoff nach Anspruch 1, wobei das Copolymer mindestens zwei nichtpolare Monomere umfasst.

8. Gehärteter Klebstoff nach Anspruch 1, wobei die nichtpolaren Monomere 10 bis 20 Gew.-%. betragen.

9. Gehärteter Klebstoff nach Anspruch 1, wobei der hydrierte Kohlenwasserstoff-Klebrigmacher 40-60 Anteile pro 100 Anteilen des Copolymers beträgt.

## Revendications

1. Composition adhésive durcie comprenant :
(a) un copolymère comprenant le produit de réaction de :
i) 65 à 94,5 % en poids d'un ester d'acrylate en C₈,
ii) 0,5 à 5 % en poids d'un monomère réticulable polaire, et
iii) 5 à 30 % en poids d'un monomère non polaire ;
dans laquelle le copolymère a une masse moléculaire moyenne en poids de 400 000 à 2 200 000 grammes/mole et dans laquelle la réaction est en présence d'un solvant ;
(b) 30 à 70 parties d'un agent poisseux hydrocarbure hydrogéné pour 100 parties du copolymère ; et
(c) 0,01 à 3 parties (solide/solide) d'un agent de réticulation pour 100 parties du copolymère ;
dans laquelle l'adhésif durci a une valeur de détachement supérieure à 6 N/cm lorsque l'on teste selon le procédé de test FINAT No. 2 sur un polyéthylène à basse densité ; et dans laquelle en outre l'adhésif durci a une valeur de cisaillement supérieure à 2000 minutes lorsque l'on teste selon le procédé de test FINAT No. 8 sur un polyéthylène à basse densité.

2. Adhésif durci selon la revendication 1, où l'adhésif a un degré de dispersion de masse moléculaire de 4 à 8.

3. Adhésif durci selon la revendication 1, dans lequel le copolymère a une viscosité inhérente de 0,4 à 2.

4. Adhésif durci selon la revendication 1, dans lequel l'ester d'acrylate en C₈ représente 80 à 90 % en poids.

5. Adhésif durci selon la revendication 1, dans lequel le monomère réticulable est un monomère à insaturation éthylénique.

6. Adhésif durci selon l'une quelconque des revendications précédentes, dans lequel le monomère à insaturation éthylénique polaire représente 1 à 2 % en poids.

7. Adhésif durci selon la revendication 1, dans lequel le copolymère comprend au moins deux monomères non polaires.

8. Adhésif durci selon la revendication 1, dans lequel les monomères non polaires représentent 10 à 20 % en poids.

9. Adhésif durci selon la revendication 1, dans lequel l'agent poisseux hydrocarbure hydrogéné représente 40 à 60 parties pour 100 parties du copolymère.
